# EUROPEAN PATENT SPECIFICATION

(11) **EP 4 474 579 B1**
(45) Date of publication and mention of the grant of the patent: **07.10.2026**
(21) Application number: 23177354.0
(22) Date of filing: 05.06.2023
(51) Int. Cl.: E02B 17/00, F03D 13/25, E04H 12/08

(54) **INTERNAL PLATFORM SUPPORT STRUCTURE FOR AN OFFSHORE FOUNDATION STRUCTURE**
TRAGSTRUKTUR FÜR EINE INTERNE PLATTFORM EINER OFFSHORE-GRÜNDUNGSSTRUKTUR
STRUCTURE DE SUPPORT DE PLATE-FORME INTERNE POUR STRUCTURE DE FONDATION EN MER

(43) Date of publication of application: 11.12.2024
(73) Proprietor: Ørsted Wind Power A/S, 7000 Fredericia (DK)
(72) Inventor: ANDERSEN, Jens Kristian, DK-7000 Fredericia (DK); ANDREASEN, Kristoffer Heick, DK-7000 Fredericia (DK); TRAN, Phu Do, DK-7000 Fredericia (DK); HOLM-NIELSEN, Thomas Ingemann, DK-2820 Gentofte (DK); BERGHOLT, Kristoffer, DK-2820 Gentofte (DK)
(74) Representative: Lewis Silkin LLP

(56) References cited:
- WO-A2-2014/070084
- US-A1- 2013 174 508
- US-A1- 2015 361 679
- US-A1- 2019 040 844
- US-A1- 2021 277 873

## Description

### Introduction

The present invention relates to internal platform support structures for offshore foundation structures and more particularly offshore foundations for wind turbines. The disclosure is particularly relevant to an internal platform support structure for a wind turbine monopile, as well as a kit for assembling such a structure.

### Background

It is common to install wind turbines in offshore locations that are subject to high winds. Typically, a monopile foundation is used to support a wind turbine tower, which supports the wind turbine generator in an elevated position. Various electrical, mechanical and systems components will be located both in the wind turbine tower, but also in the interior of the foundation structure itself. For example, the high voltage cabling which connects the wind turbine generator to the electrical grid will typically be fed down to the seabed through the monopile's interior. Accordingly, internal platforms are often installed inside the wind turbine monopile to support plant components, such as the electrical switchgear. Such internal platform supports are often known as 'Supported Internal Platforms' or 'Suspended Internal Platforms' (SIPs).

SIP structures are mounted to the top region of the monopile body and are built to support one or more platforms within the interior for providing a stable and safe working environment for technicians, as well as providing a location for supporting plant components, such as electrical components, as well as electrical cabling. For example, the internal platforms are typically needed to allow manual work to be performed for fastening the interface connection between monopile and tower, pull-in and terminate electrical cables during installation, and serve as starting point to reach the nacelle via a ladder or a lift. As such, the provision of these internal platform structures is often important for the operation of the wind turbine as a whole. Accordingly, platform structures need to be robust, reliable and easy to assemble.

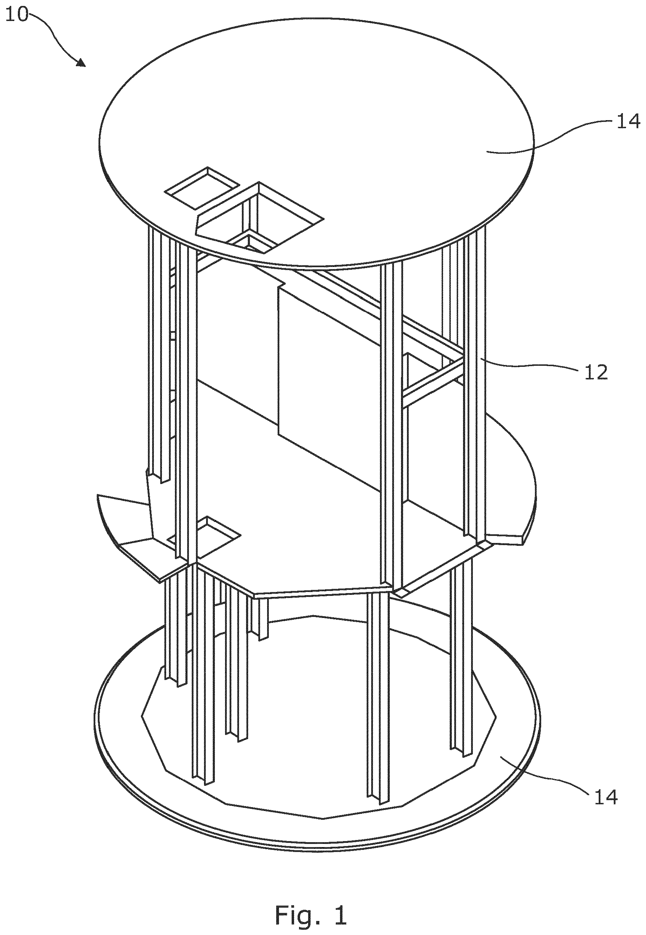

Figure 1 shows a typical conventional SIP structure 10. The structure is built from standard steel I-beams 12, which are welded together to form a support frame on top of which one or more platforms 14 are fitted.

In this respect, however, the manufacture of SIP structures is relatively challenging. Specifically, offshore wind turbines are installed throughout the world, often in remote locations. In each region, the structural elements, such as I-beams, would typically be sourced locally and welded together to form the structure. However, this is an expensive process, requiring both skilled labour for welding and custom designs depending on the locally available materials. Moreover, as SIP structures will vary from region to region, safety checks and ongoing maintenance also need to be customised for each site.

WO 2014/070084 A2 discloses a platform made of extruded self-carrying profiles supported by the supporting frame fixed to the inner interior walls.

Accordingly, there is a need to address the above problems with conventional platform support structures.

### Summary

In light of the above, the present invention seeks to provide an improved internal platform support structure that can be manufactured easily using inexpensive and readily supplied structural materials, and which can be assembled easily, thereby reducing the costs associated with constructing an internal platform support structure and reducing material wastage. In addition, by not using off-the-shelf structural parts which vary between regions, the supply chain used in the assembly can be improved and greater consistency for maintenance may be provided.

According to a first aspect of the invention, there is provided an internal platform support structure for an offshore foundation structure comprising: a plurality of structural elements for supporting a platform within the foundation structure interior, the plurality of structural elements comprising beams formed from sheet metal bent to form C-beams, and wherein the C-beams are configured to be connected together in pairs by fasteners to form an I-beam, and wherein the plurality of structural elements are assembled together and connected by fasteners to form a support frame to support the platform.

In this way, an internal platform support structure can be assembled using specifically designed structural elements that are configured to fit together so that they can be fixed in place by fasteners. Each type of specifically designed structural element may be assigned to a particular location within the assembly to enable easier, more consistent and more time-efficient assembly of the internal platform support structure.

In embodiments, the plurality of structural elements is further configured for supporting one or more further platforms within the foundation structure interior. In this way, the internal platform support structure can be customised to support multiple platforms according to the requirements of a particular foundation structure.

In embodiments, the plurality of structural elements comprises a plurality of subsets, and wherein structural elements within each subset are substantially the same. In this way, a limited number of types of structural elements can be designed according to their function within the internal platform support structure. As such, these groups of functional element types allow for easier installation as the correct type of support element can be more easily identified and used in the intended location within the internal platform support structure.

In one form, the plurality of structural elements comprises structural elements having a first end and a second end, wherein the first and second ends comprise apertures configured to receive the fasteners. In this way, the structural elements can be easily connected to assemble the support structure.

In one form, the structural elements are configured such that, when assembled, their apertures align for allowing the fasteners to connect respective structural elements together. In this way, component parts of the assembly can be easily arranged together, with the

In one form, the structural elements comprise structural elements having a body between the first and second ends, and wherein the first and second ends are provided as angled projections relative to the body for connecting the structural elements at an angle. In this way, structural elements can be connected at specific angles relative to each other. This may thereby allow for the formation of more complex structural arrangements.

As the structural elements comprise beams, elongate structural elements can be provided.

In one form, the structural elements further comprise connector parts for connecting the beams, each connector part comprising a bracket. In this way, connections between beam structural elements can be reinforced to maintain their relative positions within the assembly.

As the plurality of beams are formed from bent sheet metal, the beams can be manufactured easily and with readily available materials. In addition, the cost of manufacturing the beams can be reduced.

As the sheet metal is bent to form C-beams, these beam structural elements can have improved rigidity.

In one form, the structural elements comprise galvanised steel. In this way, a cost-effective coating for the structural elements is provided, which provides improved corrosion resistance and thereby increases their operating life.

As the plurality of C-beams are configured to be connected together in pairs to form an I-beam, the strength of the resultant structure can be increased. In another form, two C-beams may be connected into an I profile with a steel plate, such as a 30mm steel plate, interposed therebetween. As such, an increased strength may be achieved.

In one form, the plurality of structural elements is configured to be connected by rivet fasteners. In this way, a cost-effective, simple, and easily sourced fastener can be used to connect the structural elements.

According to another aspect, there is provided a flexible skirt for attachment around a base of an internal platform support structure, wherein the flexible skirt is configured to project from the structure for separating an internal area above the platform from an internal area of the wind turbine foundation structure below the platform. In this way, the environment at the bottom of the interior of the wind turbine foundation, which typically includes a humid air volume above the water column, can be sealed from the lowest internal platform. As such, the working environment on the platform is improved for personnel, corrosion of parts stored on the platform is minimised, and a climate barrier is provided for the entire air column from the lowest platform to the nacelle. The barrier is also beneficial to minimize the influx of humid air in order to optimize the dimensioning of the dehumidification system located typically within the wind turbine tower.

According to another aspect, there is provided a kit for forming an internal platform support structure for an offshore foundation structure comprising: a plurality of structural elements which, when assembled together, form a support frame for supporting a platform within the interior of the foundation structure, the plurality of structural elements comprising beams formed from sheet metal, wherein the sheet metal is bent to form C-beams, and wherein the C-beams are configured to be connected together in pairs by fasteners to form an I-beam, and wherein the plurality of structural elements is configured to be assembled together and connected by fasteners. In this way, an internal platform support structure can be assembled more easily and quickly.

### Brief Description of Drawings

Illustrative embodiments of the present invention will now be described with reference to the accompanying drawings in which:
Figure 1 illustrates an isometric view of a conventional internal platform support;
Figure 2 illustrates an isometric view of a bottom section of an internal platform support structure according to an illustrative example;
Figure 3 illustrates a top view of a structural element used in the support structure of Figure 2;
Figure 4 illustrates a top view of a blank for a further structural element used in the support structure of Figure 2;
Figure 5 illustrates an isometric view of the structural element formed from the blank shown in Figure 4;
Figure 6 illustrates an end view of the structural element shown in Figure 4 and 5;
Figure 7 illustrates an end view of two structural elements connected together; and
Figure 8 illustrates an isometric view of a connector part used in the support structure shown in Figure 2.

### Detailed Description

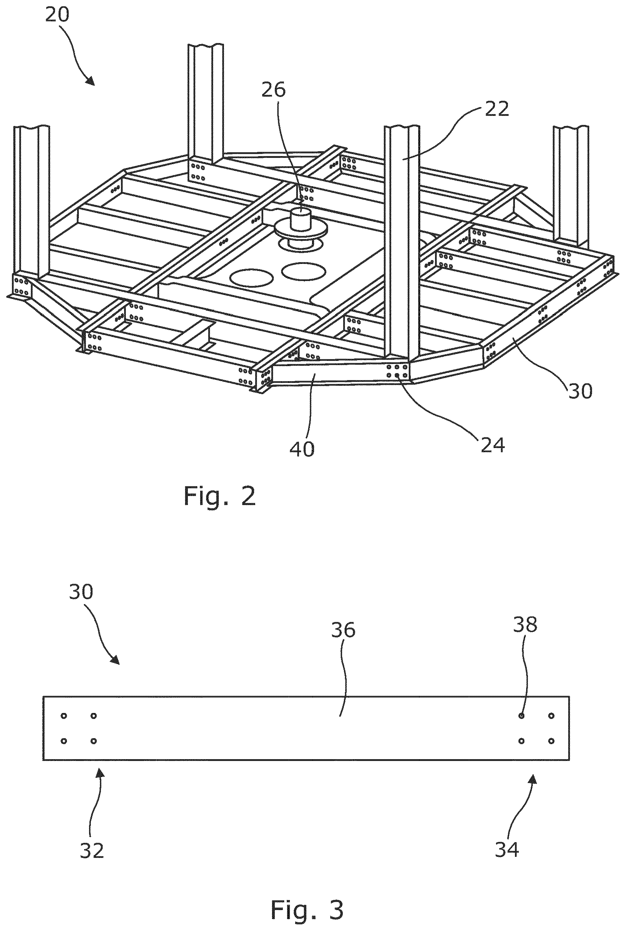

Referring to Figure 2, an internal platform support structure 20 for a wind turbine according to one arrangement of the present disclosure is shown. The internal platform support structure 20 comprises a plurality of structural elements 22,30,40 which is assembled to support a platform (not shown) within the interior of a foundation structure, such as a monopile. The plurality of structural elements 22,30,40 is provided as a kit for forming an internal platform support structure for a foundation structure. The plurality of structural elements 22,30,40 is configured to be assembled and connected together by fasteners 24. The lowermost platform of the internal platform support structure 20, as shown in Figure 2, may, for instance, include ports 26 for feeding electrical cables to connecting the wind turbine to an electrical network, or for electrically connecting a string of wind turbines together.

The kit includes a plurality of groups of types of structural elements 22,30,40. That is, the structural elements include a plurality of subsets, with each subset being configured for a particular application within the structure 20. For example, two shorter subsets of the structural elements 30,40 are used to form the outer boundary of the internal platform support, with longer elements 22 being used to form the main skeleton of the structure. That is, the longer elements 22 form the centre portion of the internal platform support structure. The structural elements 22,30,40 within in each subset may be substantially the same to simplify assembly.

Figure 3 shows a top view of a first structural element 30 used in the assembly shown in Figure 2. The structural element 30 comprises a first end 32 and a second end 34 forming end regions at the two ends of its body 36. The first end 32 and second end 34 are each provided with apertures 38 configured to receive fasteners. In this embodiment, both the first end 32 and second end 34 have four apertures 38, although it will be understood that the number of apertures 38 can vary depending on the location and the loading requirements of the structural element 30. In addition, in embodiments, the body 36 may be provided with one or more apertures 38.

The structural elements 22,30,40 are configured to be connected together via the apertures 38,48 shown in Figures 3 to 5. In one example, a first end 32 of a first structural element 30 is connected to a second end 34 of a second structural element 30. As such, the apertures 38 of the first structural element 30 align with the apertures 38 of the second structural element 30. Once aligned, a fastener (not shown) can be inserted through the apertures 38 to connect the structural elements 30 together. In another example, a first end 32 of a first structural element 30 can align with a first end 32 of a second structural element 30, or to the apertures 38 disposed on the structural element body 36 of the structural element 30.

In this example, the structural elements 22,30,40 comprise C-beams. Other types of beams may also be used, such as L-beams or square beams. Preferably, the beams according to this example of this disclosure are cut from sheet metal and bent to form the C-beam shape. The sheet metal comprises steel, but other metals or metal alloys can be used, and the metal can be galvanised to provide rust resistance. The sheet metal can be cut to form the structural elements, for example by laser cutting using a computer numerical control (CNC) machine. Naturally, standard profiles may be used as well. In that case, the apertures 38 may be drilled or cut into the structural element 30 with laser or a computer numerical control (CNC) machine. In examples, the thickness of the sheet metal can be between 0.5mm to 15mm. The thickness of the sheet metal may be chosen according to the structural requirements.

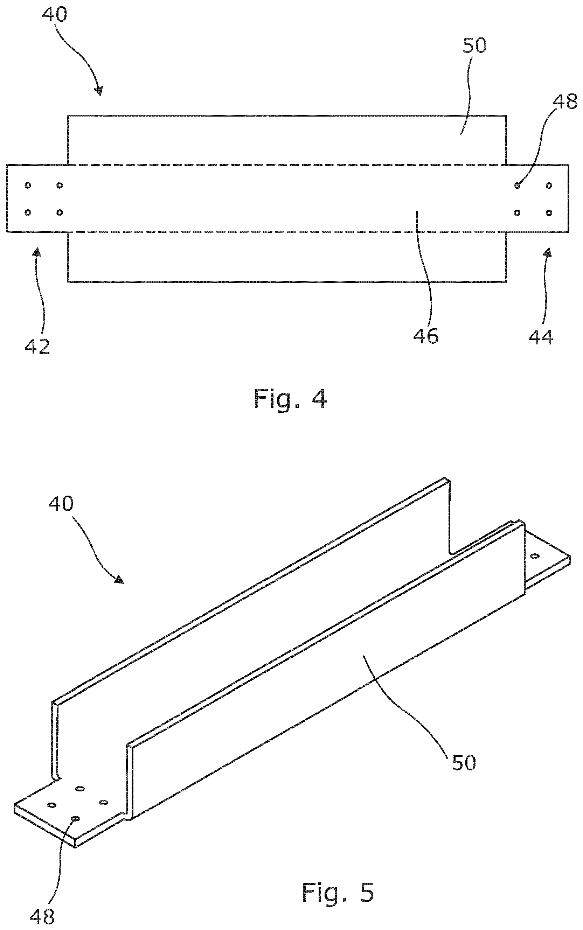

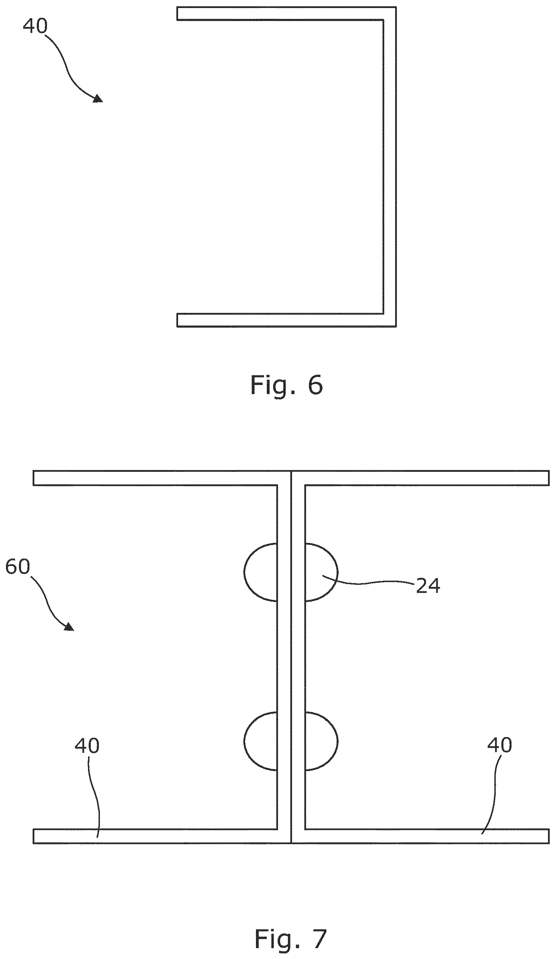

Figures 4 to 6 show a further structural element 40 used in the assembly shown in Figure 2. A blank for the structural element 40 is shown in Figure 4. The structural element 40 comprises a first end 42 and a second end 44 at either ends of a structural element body 46. In one arrangement, the first end 42 and second 44 are each provided with four apertures 48 configured to receive a fastener. The body 46 of the blank comprises two outwardly projecting sections 50 that are configured to be bent to form a C-beam when the structural element 40 is manufactured. The structural element body 46 is bent along the dashed lines shown in Figure 4. Once bent, the structural element 40 forms a C-beam, as shown in Figure 5 and 6.

The first end 42 and second end 44 of the structural element 40 can also be bent relative to the longitudinal axis of the structural element body 46. For example, to connect two structural elements 40 at an angle, the first end 42 or second end 44 of one or both structural elements 40 can be bent to an angle such that, when connected their axes are angled relative to one another. It will be understood that the first end 42 and second end 44 of the structural element 40 can have different angles.

As the structural elements 22,30,40 can be cut and bent from sheet metal, these elements can be manufactured easily throughout the world and thereby minimising costs and maintaining consistency. In addition, the complexity of the supply chains can be minimised since only sheet metal is required as a precursor for creating the majority of the parts necessary for the assembly. At the same time, the assembly of the internal platform support structure is not dependent on the manual steps of cutting and welding standard I-beams, which would otherwise be expensive and require more skilled labour.

According to another arrangement, two structural elements 40 formed as C-beams can be connected together in pairs to form an I-beam, as shown in Figure 7. To further strengthen the structure, a plate (not shown) may be put in between the two structural elements 40. The plate may be made of steel and be of any dimension; an example is for a 30 mm plate to be used. These two structural elements 40 are then connected together by fasteners 24. For example, the two structural elements 40 can be connected together using rivets, as shown in Figure 7. However, other types of fasteners, for example bolts, can alternatively be used. Often, lock-bolts are used where a collar is crimped or swaged onto the bolt or rivet.

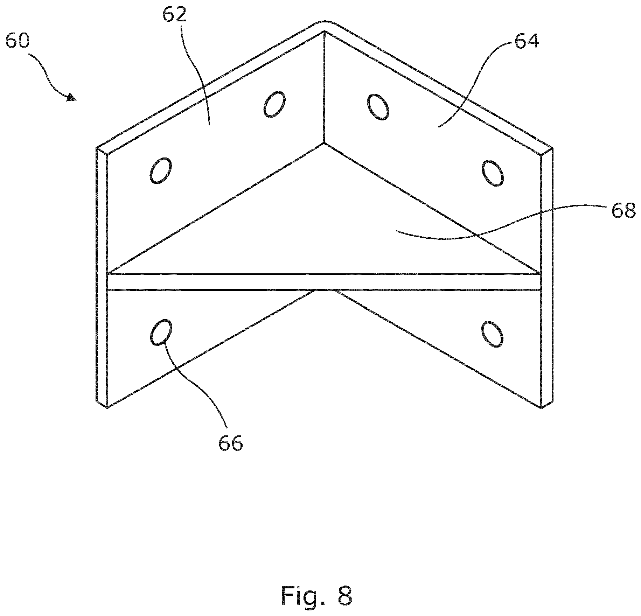

According to another example of this disclosure, the structural elements 22,30,40 further comprise connector parts 60, as shown in Figure 8. The connector part 60 comprises a first end 62 and a second end 64. The first and second ends 62,64 comprises apertures 66. The apertures 66 on the first end 62 or the second end 64 of the connector part 60 are configured to align with the apertures of a structural element such that the connector part 60 can be connected to a structural element 22,30,40 by fasteners 24. The connector part 60 therefore forms a bracket with reinforcing member 68 being provided between the first end 62 and the second end 64 to form a main body which reinforces the connector part 60. The connector part 60 can be used to connect perpendicular structural elements 22,30,40 together.

Once the structural elements 22,30,40 are assembled, the internal platform support structure 20 can be inserted into the top end of a monopile foundation and secured in place at fixing points, such that the one or more internal platforms are suspended within the monopile interior. In this way, the internal platform support structure 20 can provide a support for a platform onto which electronic components and electric wiring may be located.

The assembly therefore provides a more cost-effective and simpler arrangement for forming an internal platform support structure, whilst also simplifying supply chains.

According to a further example of this disclosure, the internal platform support structure 20 further comprises a flexible skirt (not shown) for attachment around a base of the internal platform support structure 20. The flexible skirt is configured to project away from the structure for separating an internal area above platform from an internal area of the wind turbine foundation structure below the platform. In one form, the skirt projects at roughly 45 degrees to facilitate its installation and fixing to the primary foundation structure.

The skirt can be attached between the lowermost platform support and a plate that clamps the skirt to the internal platform support structure.

As the internal platform support structure 20 is inserted into the interior of a wind turbine, the skirt unfolds and tightens around the internal wall of the wind turbine. Therefore, the skirt acts as a climate barrier to prevent the humid air trapped in the interior of the base of the foundation from corroding the materials housed on the wind turbine platform. The skirt is also easily replaceable by detaching it from its fixing. The skirt may be attached to its fixing by using a keder rail or any other suitable fixing arrangement.

It will be understood that the illustrated embodiments show applications only for the purposes of explanation. In practice, the invention may be applied to many different configurations, where the embodiment is straightforward for those skilled in the art to implement.

For example, the description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

For example, although the above illustrative embodiment has been described in the context of a support structure to be fitted to a monopile without a transition piece, a so-called 'TP-less' monopile, it will be understood that the internal platform support structure 20 may be provided for connection to a transition piece. For example, in such embodiments, the foundation structure may comprise an assembly of a monopile foundation in combination with a transition piece, with the support structure being connected to the transition piece. Even though a monopile has been used as an example, other suitable foundation structures can be used as long as they provide sufficient space for a platform. For example, the platform may sit in the turbine tower.

## Claims

1. An internal platform support structure for an offshore foundation structure comprising:
a plurality of structural elements (22, 30, 40) for supporting a platform within the foundation structure interior, the plurality of structural elements (22, 30, 40) comprising beams formed from sheet metal bent to form C-beams, and wherein the C-beams are configured to be connected together in pairs by fasteners (24) to form an I-beam, and wherein the plurality of structural elements (22, 30, 40) are assembled together and connected by fasteners (24) to form a support frame to support the platform.

2. The internal platform support structure according to claim 1, wherein the plurality of structural elements (22, 30, 40) is further configured for supporting one or more further platforms within the foundation structure interior.

3. The internal platform support structure according to claim 1 or 2, wherein the plurality of structural elements (22, 30, 40) comprises a plurality of subsets, and wherein structural elements within each subset are substantially the same.

4. The internal platform support structure according to any preceding, wherein the plurality of structural elements (22, 30, 40) comprises structural elements having a first end (32, 42) and a second end (34, 44), wherein the first and second ends (32, 42, 34, 44) comprise apertures (38, 48) configured to receive the fasteners (24).

5. The internal platform support structure according to claim **4,** wherein the structural elements (22, 30, 40) are configured such that, when assembled, their apertures (38, 48) align for allowing the fasteners (24) to connect respective structural elements (22, 30, 40) together.

6. The internal platform support structure according to claim 4 or 5, wherein the structural elements (22, 30, 40) comprise structural elements (22, 30, 40) having a body between the first and second ends, and wherein the first and second ends are provided as angled projections relative to the body for connecting the structural elements (22, 30, 40) at an angle.

7. The internal platform support structure according to claim **6,** wherein the structural elements (22, 30, 40) further comprise connector parts (60) for connecting the beams, each connector part (60) comprising a bracket.

8. The internal platform support structure according to any preceding claim, wherein the structural elements (22, 30, 40) comprise galvanised steel.

9. The internal platform support structure according to any preceding claim , wherein a plate is secured between the pairs of C-beams.

10. The internal platform support structure according to any preceding claim, wherein the plurality of structural elements (22, 30, 40) is configured to be connected by rivet fasteners (24).

11. A kit for forming the internal platform support structure of any preceding claim, the kit comprising:
a plurality of structural elements (22, 30, 40) which, when assembled together, form the support frame for supporting a platform within the interior of the foundation structure, the plurality of structural elements (22, 30, 40) comprising beams formed from sheet metal bent to form C-beams, and wherein the C-beams are configured to be connected together in pairs by fasteners (24) to form an I-beam, and wherein the plurality of structural elements (22, 30, 40) are configured to be assembled together and connected by fasteners (24).

## Patentansprüche

1. Interne Plattform-Tragstruktur für eine Offshore-Fundamentstruktur, umfassend:
eine Vielzahl von Strukturelementen (22, 30, 40) zum Abstützen einer Plattform im Inneren der Fundamentstruktur, wobei die Vielzahl von Strukturelementen (22, 30, 40) Träger umfasst, die aus zu C-Trägern gebogenem Blech ausgebildet sind, und wobei die C-Träger so konfiguriert sind, dass sie paarweise durch Verbindungselemente (24) miteinander verbunden werden, um einen I-Träger zu bilden, und wobei die Vielzahl von Strukturelementen (22, 30, 40) zusammengebaut und durch Verbindungselemente (24) miteinander verbunden sind, um einen Tragrahmen zum Abstützen der Plattform zu bilden.

2. Interne Plattform-Tragstruktur nach Anspruch 1, wobei die Vielzahl von Strukturelementen (22, 30, 40) ferner so konfiguriert ist, dass sie eine oder mehrere weitere Plattformen im Inneren der Fundamentstruktur abstützen.

3. Interne Plattform-Tragstruktur nach Anspruch 1 oder 2, wobei die Vielzahl von Strukturelementen (22, 30, 40) eine Vielzahl von Untergruppen umfasst und wobei die Strukturelemente innerhalb jeder Untergruppe im Wesentlichen gleich sind.

4. Interne Plattform-Tragstruktur nach einem der vorhergehenden Ansprüche, wobei die Vielzahl von Strukturelementen (22, 30, 40) Strukturelemente mit einem ersten Ende (32, 42) und einem zweiten Ende (34, 44) umfasst, wobei das erste und das zweite Ende (32, 42, 34, 44) Öffnungen (38, 48) aufweisen, die zur Aufnahme der Verbindungselemente (24) konfiguriert sind.

5. Interne Plattform-Tragstruktur nach Anspruch 4, wobei die Strukturelemente (22, 30, 40) so konfiguriert sind, dass ihre Öffnungen (38, 48) im zusammengebauten Zustand miteinander fluchten, sodass die Verbindungselemente (24) jeweilige Strukturelemente (22, 30, 40) miteinander verbinden können.

6. Interne Plattform-Tragstruktur nach Anspruch 4 oder 5, wobei die Strukturelemente (22, 30, 40) Strukturelemente (22, 30, 40) mit einem zwischen dem ersten und dem zweiten Ende angeordneten Körper umfassen, wobei das erste und das zweite Ende als gegenüber dem Körper abgewinkelte Vorsprünge ausgebildet sind, um die Strukturelemente (22, 30, 40) in einem Winkel miteinander zu verbinden.

7. Interne Plattform-Tragstruktur nach Anspruch 6, wobei die Strukturelemente (22, 30, 40) ferner Verbindungsteile (60) zum Verbinden der Träger umfassen, wobei jedes Verbindungsteil (60) einen Halter umfasst.

8. Interne Plattform-Tragstruktur nach einem der vorhergehenden Ansprüche, wobei die Strukturelemente (22, 30, 40) verzinkten Stahl umfassen.

9. Interne Plattform-Tragstruktur nach einem der vorhergehenden Ansprüche, wobei eine Platte zwischen den Paaren von C-Trägern befestigt ist.

10. Interne Plattform-Tragstruktur nach einem der vorhergehenden Ansprüche, wobei die Vielzahl von Strukturelementen (22, 30, 40) so konfiguriert ist, dass sie durch Nieten (24) befestigt sind.

11. Ein Bausatz zum Herstellen der internen Plattform-Tragstruktur nach einem der vorhergehenden Ansprüche, der Bausatz umfassend:
eine Vielzahl von Strukturelementen (22, 30, 40), die im zusammengebauten Zustand den Tragrahmen zum Abstützen einer Plattform im Inneren der Fundamentstruktur bilden, wobei die Vielzahl von Strukturelementen (22, 30, 40) Träger umfasst, die aus zu C-Trägern gebogenem Blech ausgebildet sind, und wobei die C-Träger so konfiguriert sind, dass sie paarweise durch Verbindungselemente (24) miteinander verbunden werden, um einen I-Träger zu bilden, und wobei die Vielzahl von Strukturelementen (22, 30, 40) so konfiguriert ist, dass sie zusammengebaut und durch Verbindungselemente (24) miteinander verbunden werden.

## Revendications

1. Structure de support de plateforme interne destinée à une structure de fondation en mer comprenant :
une pluralité d'éléments structuraux (22, 30, 40) destinée à supporter une plateforme au sein de l'intérieur de la structure de fondation, la pluralité d'éléments structuraux (22, 30, 40) comprenant des poutres formées à partir de tôle pliée pour former des poutres en C, et dans laquelle les poutres en C sont conçues pour être reliées entre elles par paires par des pièces de fixation (24) pour former une poutre en I, et dans laquelle la pluralité d'éléments structuraux (22, 30, 40) sont assemblés entre eux et reliés par des pièces de fixation (24) pour former un cadre de support destiné à supporter la plateforme.

2. Structure de support de plateforme interne selon la revendication 1, dans laquelle la pluralité d'éléments structuraux (22, 30, 40) est conçue en outre pour supporter une ou plusieurs autres plateformes au sein de l'intérieur de la structure de fondation.

3. Structure de support de plateforme interne selon la revendication 1 ou 2, dans laquelle la pluralité d'éléments structuraux (22, 30, 40) comprend une pluralité de sous-ensembles, et dans laquelle les éléments structuraux au sein de chaque sous-ensemble sont sensiblement les mêmes.

4. Structure de support de plateforme interne selon une quelconque revendication précédente, dans laquelle la pluralité d'éléments structuraux (22, 30, 40) comprend des éléments structuraux présentant une première extrémité (32, 42) et une seconde extrémité (34, 44), dans laquelle les première et seconde extrémités (32, 42, 34, 44) comprennent des ouvertures (38, 48) conçues pour recevoir les pièces de fixation (24).

5. Structure de support de plateforme interne selon la revendication 4, dans laquelle les éléments structuraux (22, 30, 40) sont conçus de sorte que, lorsqu'ils sont assemblés, leurs ouvertures (38, 48) s'alignent pour permettre aux pièces de fixation (24) de relier ensemble les éléments structuraux respectifs (22, 30, 40).

6. Structure de support de plateforme interne selon la revendication 4 ou 5, dans laquelle les éléments structuraux (22, 30, 40) comprennent des éléments structuraux (22, 30, 40) présentant un corps entre les première et seconde extrémités, et dans laquelle les première et seconde extrémités sont prévues sous forme de saillies angulaires par rapport au corps pour relier les éléments structuraux (22, 30, 40) à un angle.

7. Structure de support de plateforme interne selon la revendication 6, dans laquelle les éléments structuraux (22, 30, 40) comprennent en outre des parties de liaison (60) pour relier les poutres, chaque partie de liaison (60) comprenant un support.

8. Structure de support de plateforme interne selon une quelconque revendication précédente, dans laquelle les éléments structuraux (22, 30, 40) comprennent de l'acier galvanisé.

9. Structure de support de plateforme interne selon une quelconque revendication précédente, dans laquelle une plaque est immobilisée entre les paires de poutres en C.

10. Structure de support de plateforme interne selon une quelconque revendication précédente, dans laquelle la pluralité d'éléments structuraux (22, 30, 40) est conçue pour être reliée par des pièces de fixation à rivets (24).

11. Kit servant à former la structure de support de plateforme interne selon une quelconque revendication précédente, le kit comprenant :
une pluralité d'éléments structuraux (22, 30, 40) qui, lorsqu'ils sont assemblés, forment le cadre de support destiné à supporter une plateforme au sein de l'intérieur de la structure de fondation, la pluralité d'éléments structuraux (22, 30, 40) comprenant des poutres formées à partir de tôle pliée pour former des poutres en C, et dans laquelle les poutres en C sont conçues pour être reliées entre elles par paires par des pièces de fixation (24) pour former une poutre en I, et dans laquelle la pluralité d'éléments structuraux (22, 30, 40) sont conçus pour être assemblés entre eux et reliés par des pièces de fixation (24).
